(19) Europäisches Patentamt
European Patent Office
Office européen des brevets

(11) EP 4 736 643 A1

(12) EUROPEAN PATENT APPLICATION
published in accordance with Art. 153(4) EPC

(43) Date of publication:
**06.05.2026 Bulletin 2026/19**

(21) Application number: **24831355.3**

(22) Date of filing: **26.03.2024**

(51) International Patent Classification (IPC):
***A01N 33/12*** (2006.01) ***A01N 31/02*** (2006.01)
***A01N 43/40*** (2006.01) ***A01P 1/00*** (2006.01)
***A01P 3/00*** (2006.01) ***C11D 1/14*** (2006.01)
***C11D 1/29*** (2006.01) ***C11D 1/62*** (2006.01)
***C11D 3/26*** (2006.01) ***C11D 3/28*** (2006.01)
***C11D 3/48*** (2006.01)

(52) Cooperative Patent Classification (CPC):
**A01N 31/02; A01N 33/12; A01N 43/40; A01P 1/00; A01P 3/00; C11D 1/14; C11D 1/29; C11D 1/62; C11D 3/26; C11D 3/28; C11D 3/48**

(86) International application number:
**PCT/JP2024/011911**

(87) International publication number:
**WO 2025/004478 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023 JP 2023108095**

(71) Applicant: **Kao Corporation**
**Tokyo 103-8210 (JP)**

(72) Inventors:
- **SAEKI, Shiho**
  **Tokyo 103-8210 (JP)**
- **KIJITORI, Hiroki**
  **Tokyo 103-8210 (JP)**

(74) Representative: **Hoffmann Eitle**
**Patent- und Rechtsanwälte PartmbB**
**Arabellastraße 30**
**81925 München (DE)**

# (54) BIOFILM GERMICIDE COMPOSITION

(57) Provided are a biofilm bactericidal agent composition and a biofilm bactericidal method using the same excellent in bactericidal performance for bacteria existing in a biofilm adhering to an object article, especially a textile product.

A biofilm bactericidal agent composition containing the following components (a) and (b),
component (a): one or more compounds selected from (a1) a quaternary ammonium salt having a long-chain alkyl group represented by the general formula (a1), and (a2) a bispyridinium compound, and
component (b): an anionic surfactant including one or more compounds selected from (b1) a specific anionic surfactant represented by the general formula (b1), and (b2) an internal olefin sulfonate with 14 or more and 20 or less carbons.

EP 4 736 643 A1

## Description

Field of the Invention

The present invention relates to a biofilm bactericidal agent composition and a biofilm bactericidal method.

Background of the Invention

Once bacteria adhere to object articles, the bacteria adhering to the object articles grow and form biofilms. Biofilms are also called biological films or slime, and generally refer to three-dimensional structures formed from macromolecular compounds such as polysaccharides, proteins, and nucleic acids, or the like produced by microorganisms such as bacteria or the like to envelop microorganisms when microorganisms adhere to and grow on the surface of matter.

Biofilms also pose problems for individual ordinary people in various situations. For example, in wet environments in households such as the kitchen, sink, areas near bathroom drains, and others, they cause unpleasant slimy stains, foul odors, or the like. Further, not only in these direct water environment areas, but also in situations where water, dampness, and dirt coexist, such as scratches on cutting boards, the inside of dishwashing sponges, washing tubs, and further, fabric products such as clothing, dishcloths, rags, bath mats, or the like, and others, biofilms are more likely to be formed and cause problems.

Further, detergents formulated with various types of surfactants are widely used for washing textile products such as clothing or the like. In recent years, as people have become more aware of hygiene, concern about bacteria or viruses adhering to the surfaces of textile products has also been increasing. Therefore, people are undertaking extra efforts or costs to do their washing, such as soaking socks or sweat-stained clothing prone to bacterial growth in detergent liquids for some time, using disinfectants or bleaching agents together with detergents for textile products, or the like.

US-B 5728667 discloses a germicidal light-duty dishwashing detergent composition in either a gel or liquid form, which contains a dioctyl dimethylammonium salt and an alkyl ether carboxylate.

Summary of the Invention

Biofilms adhering to object articles, especially textile products are very difficult to remove because macromolecules constituting biofilms act as a protection barrier that guards bacteria from various types of base agents, and bacteria existing in biofilms are also very difficult to kill.

The present invention provides a biofilm bactericidal agent composition and a biofilm bactericidal method using the same excellent in bactericidal performance for bacteria existing in a biofilm adhering to an object article, especially a textile product.

In the present invention, the biofilm bactericidal agent composition refers to a composition having an effect on bactericidal performance for bacteria existing in a biofilm.

Further, in the present invention, the biofilm bactericidal method refers to a method for killing bacteria existing in a biofilm.

Further, in the present invention, biofilm bacteria killing refers to killing bacteria existing in a biofilm.

Further, in the present invention, the viewpoint of biofilm bacteria killing refers to the viewpoint of more enhancing the effect of killing bacteria existing in a biofilm.

The present invention relates to a biofilm bactericidal agent composition containing the following components (a) and (b), component (a): one or more compounds selected from (a1) a compound represented by the following general formula (a1) (hereinafter referred to as component (a1)) and (a2) a bispyridinium compound (hereinafter referred to as component (a2)),

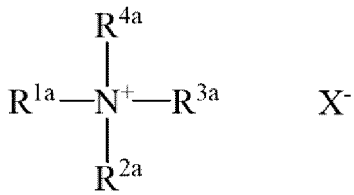

( a1 )

wherein in the general formula (a1), $R^{1a}$ and $R^{2a}$ are each independently a linear or branched alkyl group with 8 carbons, $R^{3a}$ and $R^{4a}$ are each independently a linear or branched alkyl group with 1 or more and 3 or less carbons, and $X^-$ is an anion, and

component (b): an anionic surfactant including one or more compounds selected from (b1) a compound represented by the following general formula (b1) (hereinafter referred to as component (b1)) and (b2) an internal olefin sulfonate with 14 or more and 20 or less carbons (hereinafter referred to as component (b2)),

$$R^{1b}\text{-O-}[(PO)_p/(EO)_q]\text{-}SO_3M \qquad (b1)$$

wherein in the general formula (b1), $R^{1b}$ is a hydrocarbon group with 8 or more and 22 or less carbons, PO is a propyleneoxy group, EO is an ethyleneoxy group, "/" is a symbol indicating that the order in which PO and EO are bonded is unrestricted, p is an average number of added moles of PO and is a number of 0 or more and 10 or less, q is an average number of added moles of EO and is a number of 0 or more and 25 or less, and M is a hydrogen ion, an alkali metal ion, an alkaline earth metal ion (1/2 atom), an ammonium ion, or an organic ammonium ion.

Further, the present invention relates to a biofilm bactericidal method including bringing the biofilm bactericidal agent composition of the present invention or a treatment liquid which is an aqueous dilute solution of the composition into contact with an object article where a biofilm exists.
Further, the present invention relates to a biofilm bactericidal method including bringing a treatment liquid into contact with an object article where a biofilm exists, the treatment liquid containing the above components (a) and (b).
Further, the present invention relates to use of a composition containing the above components (a) and (b) for killing bacteria in a biofilm adhering to a textile product or a hard article.
The present invention provides a biofilm bactericidal agent composition and a biofilm bactericidal method using the same excellent in bactericidal performance for bacteria existing in a biofilm adhering to an object article, especially a textile product.

Embodiments of the Invention

The reason why the biofilm bactericidal agent composition and the biofilm bactericidal method using the same of the present invention are excellent in bactericidal performance for bacteria existing in a biofilm adhering to an object article, especially a textile product is not wholly certain, but is inferred to be as follows.
It seems that the present invention using a specific cationic surfactant as component (a) and a specific anionic surfactant as component (b) together allows a base agent to permeate the inside of the biofilm and act, making it possible to kill bacteria in the biofilm. Specifically, the formation of a loose ion complex of a specific cationic surfactant as component (a) and a specific anionic surfactant as component (b) prevents the non-specific adsorption of bactericidal component (a) to the surface of the biofilm and enables the ion complex of components (a) and (b) to permeate the inside of the biofilm. In addition, it seems that the ion complex which has permeated is moderately cationic and thus acts on the bacteria, making it possible to kill the bacteria.
Note that the present invention is not limited to the above acting mechanism.

[Biofilm bactericidal agent composition]

<Component (a)>

The biofilm bactericidal agent composition of the present invention contains, as component (a), one or more compounds selected from (a1) a compound represented by the following general formula (a1) (hereinafter referred to as component (a1)) and (a2) a bispyridinium compound (hereinafter referred to as component (a2)),

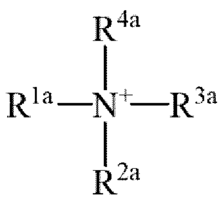 $X^-$ (a1)

wherein in the general formula (a1), $R^{1a}$ and $R^{2a}$ are each independently a linear or branched alkyl group with 8 carbons, $R^{3a}$ and $R^{4a}$ are each independently a linear or branched alkyl group with 1 or more and 3 or less carbons, and $X^-$ is an anion.
In the compound of the general formula (a1), which is component (a1), $R^{1a}$ and $R^{2a}$ are each independently a linear or branched alkyl group with 8 carbons, and preferably a linear alkyl group with 8 carbons from the viewpoint of biofilm bacteria killing. $R^{1a}$ and $R^{2a}$ are preferably the same as each other from the viewpoint of biofilm bacteria killing.

$R^{3a}$ and $R^{4a}$ are each independently a linear or branched alkyl group with 1 or more and 3 or less carbons. Examples of the alkyl group with 1 or more and 3 or less carbons include a group selected from a methyl group, an ethyl group, and a propyl group.

$X^-$ is an anion. The anion is preferably a halogen ion or an alkyl sulfate ion with 1 or more and 3 or less carbons from the viewpoint of biofilm bacteria killing. Examples of the halogen ion include, for example, a chloride ion, a bromide ion, or an iodide ion. $X^-$ is preferably a chloride ion from the viewpoint of biofilm bacteria killing. Further, examples of the alkyl sulfate ion with 1 or more and 3 or less carbons include, for example, a methyl sulfate ion, an ethyl sulfate ion, or a propyl sulfate ion.

A single type or a combination of two or more types of component (a1) may be used.

Component (a2) is a bispyridinium compound.

Examples of the bispyridinium compound include, for example, those described in GB-B 1533952, JP-A S52-105228, and WO-A 2014-100807, or the like. Specifically, the bispyridinium compound is preferably one or more selected from a compound represented by the following general formula (a21) and a compound represented by the following general formula (a22) from the viewpoint of biofilm bacteria killing,

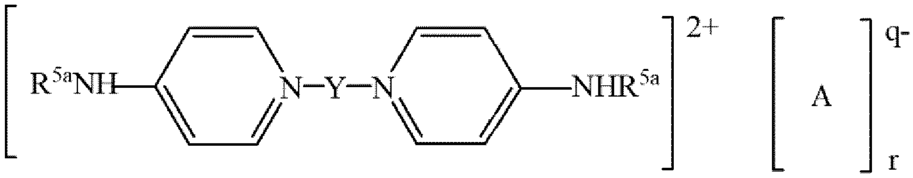
(a21)

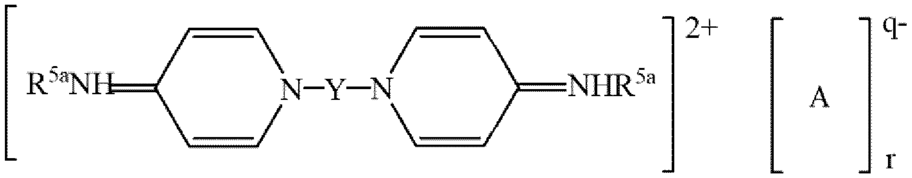
(a22)

wherein Y is an alkylene or alkenylene group having 4 to 18 carbon atoms, each $R^{5a}$ represents an alkyl group having 6 to 18 carbon atoms, a cycloalkyl group having 5 to 7 carbon atoms, or a phenyl group which may be or may not be substituted with a halogen, A is an anion, and q is 1 or 2, r is 1 or 2, and $q \times r = 2$.

A is a monovalent or divalent anion, and may be an anion from a compound such as, for example, a chloride, a bromide, a phosphate, an orthosilicate, an organic acid, for example, an organic acid having the formula $R^{6a}$-COO- or an alkyl (with 1 or more and 40 or less carbons) sulfonic acid, or the like. Here, $R^{6a}$ is hydrogen, hydroxyl, or an alkyl group with 1 or more and 40 or less carbons.

Examples of the organic acid corresponding to the anion of A include, for example, acetic acid, propionic acid, phosphoric acid, glycolic acid, pyruvic acid, oxalic acid, maleic acid, malonic acid, succinic acid, fumaric acid, tartaric acid, citric acid, benzoic acid, cinnamic acid, mandelic acid, methanesulfonic acid, ethanesulfonic acid, p-toluenesulfonic acid, glycyrrhizic acid, salicylic acid, stearic acid, phosphonic acid, trifluoroacetic acid, cyanoacetic acid, 4-cyanobenzoic acid, 2-chlorobenzoic acid, 2-nitrobenzoic acid, phenoxyacetic acid, benzenesulfonic acid, and others.

A preferable bispyridinium compound is the compound of the general formula (a22) and further octenidine dihydrochloride (a compound of the general formula (a22) in which each $R^{5a}$ is an n-octyl group, Y is an n-decenyl group, A is Cl, q is 1, and r is 2, CAS number 70775-75-6) from the viewpoint of biofilm bacteria killing.

A single type or a combination of two or more types of component (a2) may be used.

Component (a) is preferably component (a1), more preferably one or more compounds selected from a dioctyl methyl ethyl ammonium salt and a dioctyl dimethyl ammonium salt, and further preferably a dioctyl dimethyl ammonium salt from the viewpoint of biofilm bacteria killing.

<Component (b)>

The biofilm bactericidal agent composition of the present invention contains, as component (b), an anionic surfactant including one or more compounds selected from (b1) a compound represented by the following general formula (b1) (hereinafter referred to as component (b1)) and (b2) an internal olefin sulfonate with 14 or more and 20 or less carbons (hereinafter referred to as component (b2)),

$$R^{1b}\text{-O-}[(PO)_p/(EO)_q]\text{-}SO_3M \qquad (b1)$$

wherein in the general formula (b1), $R^{1b}$ is a hydrocarbon group with 8 or more and 22 or less carbons, PO is a propyleneoxy group, EO is an ethyleneoxy group, "/" is a symbol indicating that the order in which PO and EO are bonded is unrestricted, p is an average number of added moles of PO and is a number of 0 or more and 10 or less, q is an average number of added moles of EO and is a number of 0 or more and 25 or less, and M is a hydrogen ion, an alkali metal ion, an alkaline earth metal ion (1/2 atom), an ammonium ion, or an organic ammonium ion.

In the compound of the general formula (b1) of component (b1), $R^{1b}$ is a hydrocarbon group, preferably a linear or branched alkyl group or a linear or branched alkenyl group, more preferably a linear or branched alkyl group, and further preferably a linear alkyl group with 8 or more, preferably 10 or more, and more preferably 12 or more, and 22 or less, preferably 20 or less, more preferably 18 or less, and further preferably 16 or less carbons from the viewpoint of biofilm bacteria killing.

p is an average number of added moles of PO, and is a number of 0 or more, preferably 0.1 or more, more preferably 0.2 or more, further preferably 0.3 or more, furthermore preferably 0.5 or more, further preferably 1 or more, and furthermore preferably 2 or more, and 10 or less, preferably 8 or less, more preferably 5 or less, further preferably 3 or less, and furthermore preferably 2.5 or less from the viewpoint of biofilm bacteria killing.

q is an average number of added moles of EO, and is a number of 0 or more, preferably 0.5 or more, more preferably 1 or more, and furthermore preferably 2 or more, and 25 or less, preferably 8 or less, more preferably 5 or less, and further preferably 3 or less from the viewpoint of biofilm bacteria killing.

M is a hydrogen ion, an alkali metal ion, an alkaline earth metal ion (1/2 atom), an ammonium ion, or an organic ammonium ion. Examples of the alkali metal ion include a sodium ion or a potassium ion, examples of the alkaline earth metal ion (1/2 atom) include a calcium ion or a magnesium ion, and examples of the organic ammonium ion include an alkanolamine having 1 to 3 alkanol groups with 2 or 3 carbons (for example, monoethanolamine, diethanolamine, triethanolamine, triisopropanolamine, or the like).

Component (b2) is an internal olefin sulfonate. The carbon number of the internal olefin sulfonate in component (b2) is preferably 14 or more and more preferably 16 or more, and preferably 24 or less, more preferably 20 or less, and further preferably 18 or less from the viewpoint of biofilm bacteria killing. The carbon number of the internal olefin sulfonate in component (b2) represents the carbon number of an internal olefin that forms a covalent bond with a sulfonic acid salt.

The internal olefin sulfonate of component (b2) is sulfonates obtained by sulfonating, neutralizing, and hydrolyzing internal olefins (olefins having a double bond inside the olefin chains) with preferably 10 or more and more preferably 14 or more and preferably 20 or less and more preferably 18 or less carbons as raw materials. The internal olefins also include those which contain minute amounts of so-called alpha-olefins (hereinafter also referred to as $\alpha$-olefins) in which the position of a double bond is present at position 1 of the carbon chains. Further, when the internal olefins are sulfonated, $\beta$-sultones are quantitatively produced, and part of the $\beta$-sultones are changed to $\gamma$-sultones and olefin sulfonic acids, and these are further converted into hydroxy alkane sulfonates and olefin sulfonates in the neutralization/hydrolysis process (for example, J. Am. Oil Chem. Soc. 69, 39 (1992)). Here, the obtained hydroxy alkane sulfonates and olefin sulfonates respectively have a hydroxy group inside the alkane chains and a double bond inside the olefin chains. Further, the obtained product is primarily a mixture of these and may sometimes also partially contain minute amounts of hydroxy alkane sulfonates having a hydroxy group at the end of the carbon chains or olefin sulfonates having a double bond at the end of the carbon chains.

As used herein, each of these products and a mixture of them are collectively referred to as the internal olefin sulfonate (component (b2)). Further, the hydroxy alkane sulfonates are referred to as hydroxy species of the internal olefin sulfonate (hereinafter also referred to as HAS species), and the olefin sulfonates are referred to as olefin species of the internal olefin sulfonate (hereinafter also referred to as IOS species).

Note that a mass ratio between HAS species and IOS species of the compound in component (b2) can be measured by a high-performance liquid chromatography mass spectrometer (hereinafter abbreviated as HPLC-MS). Specifically, the mass ratio can be determined from the HPLC-MS peak areas of component (b2).

Examples of a salt of the internal olefin sulfonate include an alkali metal salt, an alkaline earth metal (1/2 atom) salt, an ammonium salt, or an organic ammonium salt. Examples of the alkali metal salt include a sodium salt or a potassium salt. Examples of the organic ammonium salt include an alkanolammonium salt with 2 or more and 6 or less carbons including an alkanolamine.

As is clear from the above producing method, the sulfonic acid group in the internal olefin sulfonate of component (b2) is present inside the carbon chain of the internal olefin sulfonate, i.e., an olefin chain or an alkane chain, and component (b2) may sometimes also partially contain minute amounts of compounds in which a sulfonic acid group is present at the end of the carbon chains.

A content of an internal olefin sulfonate in which a sulfonic acid group is present at position 5 or more and preferably position 5 or more and 9 or less in component (b2) is preferably 5 mass% or more, more preferably 10 mass% or more, further preferably 15 mass% or more, and furthermore preferably 20 mass% or more, and preferably 60 mass% or less, more preferably 55 mass% or less, further preferably 45 mass% or less, and furthermore preferably 40 mass% or less from the viewpoint of biofilm bacteria killing.

A mass ratio of a content of an internal olefin sulfonate in which a sulfonic acid group is present at position 2 or more and 4 or less [hereinafter sometimes referred to as (IO-1S)] to a content of the internal olefin sulfonate in which a sulfonic acid group is present at position 5 or more and preferably position 5 or more and 9 or less [hereinafter sometimes referred to as (IO-2S)] in component (b2), (IO-1S)/(IO-2S), is preferably 0.5 or more, more preferably 0.8 or more, further preferably 1.0 or more, furthermore preferably 1.5 or more, furthermore preferably 2 or more, furthermore preferably 2.5 or more, furthermore preferably 3 or more, furthermore preferably 4 or more, and furthermore preferably 4.5 or more from the viewpoint of biofilm bacteria killing, and preferably 10 or less, more preferably 8 or less, and further preferably 6 or less from the viewpoint of biofilm bacteria killing.

Note that the contents of the compounds having a sulfonic acid group at different positions in component (b2) can be measured by HPLC-MS. As used herein, the contents of the compounds having a sulfonic acid group at different positions are determined as mass proportions based on the HPLC-MS peak areas of the compounds having a sulfonic acid group at their respective positions in the whole HAS species of component (b2).

In component (b2), a content of an olefin sulfonate in which a sulfonic acid group is present at position 1 in component (b2) is preferably 10 mass% or less, more preferably 7 mass% or less, further preferably 5 mass% or less, and furthermore preferably 3 mass% or less from the viewpoint of biofilm bacteria killing, and preferably 0.01 mass% or more from the viewpoints of reducing production costs and improving productivity.

The positions of a sulfonic acid group in these compounds are positions in the olefin chains or the alkane chains.

The above internal olefin sulfonate can be a mixture of hydroxy species and olefin species. A mass ratio of a content of olefin species of the internal olefin sulfonate to a content of hydroxy species of the internal olefin sulfonate in component (b2) (olefin species/hydroxy species) can be 0/100 or more and further 5/95 or more, and 50/50 or less, further 40/60 or less, further 30/70 or less, and further 25/75 or less.

Examples of an anionic surfactant other than components (b1) and (b2) include one or more selected from an alkylbenzene sulfonic acid, an α-olefin sulfonic acid, an alkane sulfonic acid, a saturated or unsaturated fatty acid, an alkyl or alkenyl ether carboxylic acid, an α-sulfo fatty acid, an N-acyl amino acid, a phosphoric acid mono or diester, a sulfosuccinic acid ester, and a salt of these.

The anionic surfactant has an alkyl group or alkenyl group with, for example, 8 or more and 22 or less carbons.

Examples of a salt of the anionic surfactant include an alkali metal salt, an alkaline earth metal (1/2 atom) salt, an ammonium salt, or an organic ammonium salt. Examples of the alkali metal salt include a sodium salt or a potassium salt. Examples of the organic ammonium salt include an alkanolammonium salt with 2 or more and 6 or less carbons including an alkanolamine.

Component (b) is preferably an anionic surfactant including one or more compounds selected from component (b1) of the general formula (b1), in which p is 0.1 or more and 10 or less and q is 0 or more and 25 or less, and the internal olefin sulfonate of component (b2), which has 16 or more and 18 or less carbons from the viewpoint of biofilm bacteria killing.

In the biofilm bactericidal agent composition of the present invention, a content of components (b1) and (b2) in component (b) is preferably 70 mass% or more, more preferably 80 mass% or more, and further preferably 90 mass% or more, and preferably 100 mass% or less and more preferably 100 mass% from the viewpoint of biofilm bacteria killing. The aforementioned content of components (b1) and (b2) in component (b) does not limitedly require that components (b1) and (b2) be both essential components, and component (b) only needs to contain at least any of the components.

Component (b) is preferably one or more selected from components (b1) and (b2) and more preferably component (b1) of the general formula (b1) in which p is 0.1 or more from the viewpoint of biofilm bacteria killing.

A single type or a combination of two or more types of component (b) may be used.

<Composition and others>

The biofilm bactericidal agent composition of the present invention contains component (a) in the composition in an amount of preferably 0.001 mass% or more, more preferably 0.01 mass% or more, further preferably 0.1 mass% or more, furthermore preferably 1 mass% or more, furthermore preferably 3 mass% or more, furthermore preferably 6 mass% or more, furthermore preferably 9 mass% or more, and furthermore preferably 12 mass% or more, and preferably 80 mass% or less, more preferably 70 mass% or less, further preferably 50 mass% or less, furthermore preferably 30 mass% or less, furthermore preferably 25 mass% or less, furthermore preferably 20 mass% or less, and furthermore preferably 15 mass% or less from the viewpoint of biofilm bacteria killing.

In the present invention, when the composition contains component (a1) as component (a), a chloride salt equivalent value is used as the mass of component (a1), and when the composition contains component (a2) as component (a), a hydrochloride salt equivalent value is used as the mass of component (a2).

The biofilm bactericidal agent composition of the present invention contains component (b) in the composition in an amount of preferably 0.001 mass% or more, more preferably 0.01 mass% or more, further preferably 0.1 mass% or more, furthermore preferably 1 mass% or more, furthermore preferably 3 mass% or more, furthermore preferably 6

mass% or more, furthermore preferably 9 mass% or more, and furthermore preferably 12 mass% or more, and preferably 80 mass% or less, more preferably 70 mass% or less, further preferably 50 mass% or less, furthermore preferably 30 mass% or less, furthermore preferably 25 mass% or less, furthermore preferably 20 mass% or less, and furthermore preferably 15 mass% or less from the viewpoint of biofilm bacteria killing.

In the present invention, a sodium salt equivalent value is used as the mass of component (b).

A mass ratio of a content of component (a) to a content of component (b) in the biofilm bactericidal agent composition of the present invention, (a)/(b), is preferably 0.001 or more, more preferably 0.005 or more, further preferably 0.01 or more, furthermore preferably 0.02 or more, furthermore preferably 0.1 or more, furthermore preferably 0.12 or more, furthermore preferably 0.15 or more, furthermore preferably 0.3 or more, furthermore preferably 0.5 or more, and furthermore preferably 0.7 or more, and preferably 40 or less, more preferably 30 or less, further preferably 20 or less, furthermore preferably 10 or less, furthermore preferably 7 or less, furthermore preferably 5 or less, furthermore preferably 3 or less, furthermore preferably 2 or less, furthermore preferably 1.5 or less, and furthermore preferably 1 or less from the viewpoint of biofilm bacteria killing.

The biofilm bactericidal agent composition of the present invention can facilitate biofilm bacteria killing if it contains, as other components, for example, a water-soluble solvent, a chelating agent, a pH adjuster, a preservative, a colorant, a fragrance, a hydrotrope agent, an anti-recontamination and dispersing agent such as a polymer or the like, an enzyme, an antibacterial agent, an antioxidant, a defoamer, and others (excluding those qualifying as components (a) and (b)).

The biofilm bactericidal agent composition of the present invention contains water. Ion-exchanged water, tap water, purified water, or the like can be used as the water. Water can be used as the balance of the composition in such an amount that the makeup of the entire composition becomes 100 mass%.

The biofilm bactericidal agent composition of the present invention contains water in the composition in an amount of preferably 0.1 mass% or more, more preferably 1 mass% or more, and further preferably 5 mass% or more, and preferably 99 mass% or less and more preferably 95 mass% or less.

The biofilm bactericidal agent composition of the present invention has a pH at 25°C of preferably 1 or more, more preferably 3 or more, further preferably 5 or more, and furthermore preferably 6 or more, and preferably 14 or less, more preferably 12 or less, and further preferably 10 or less from the viewpoint of biofilm bacteria killing. The pH is a value measured at 25°C using a glass electrode. Specifically, it is measured by the method below.

<Method for measuring pH>

A pH electrode (manufactured by SI Analytics, BlueLine 17 pH) is calibrated in advance with Reagecon pH 4.000 High Resolution Colour Coded Buffer Solution and Reagecon pH 7.000 High Resolution Colour Coded Buffer Solution using Multi-parameter Analyser C3010 manufactured by Consort, and sufficiently rinsed with ion-exchanged water. The pH electrode calibrated and washed as described above is placed in the biofilm bactericidal agent composition whose temperature has been adjusted to 25°C, and measurements are taken using AUTO HOLD mode of a pH meter until the measurement value becomes constant.

The biofilm bactericidal agent composition of the present invention may be a biofilm bactericidal agent composition formulated with components (a) and (b), and the composition may further be formulated with water or other components. The matters described in the biofilm bactericidal agent composition of the present invention can be appropriately applied to this biofilm bactericidal agent composition, and the content of each component and each mass ratio described above can be read and applied as the formulation amount of each component.

The biofilm bactericidal agent composition of the present invention can be suitably used for textile products or hard articles and can be more preferably used for textile products.

Fibers of the textile products may be either hydrophobic fibers or hydrophilic fibers. Examples of the hydrophobic fibers include, for example, protein fibers (milk protein casein fiber, promix, or the like), polyamide fibers (nylon or the like), polyester fibers (polyester or the like), polyacrylonitrile fibers (acrylic or the like), polyvinyl alcohol fibers (vinylon or the like), polyvinyl chloride fibers (polyvinyl chloride or the like), polyvinylidene chloride fibers (vinylidene or the like), polyolefin fibers (polyethylene, polypropylene, or the like), polyurethane fibers (polyurethane or the like), polyvinyl chloride/polyvinyl alcohol copolymer fibers (Polyclar or the like), polyalkylene paraoxybenzoate fibers (benzoate or the like), polyfluoroethylene fibers (polytetrafluoroethylene or the like), and others. Examples of the hydrophilic fibers include, for example, seed hair fibers (cotton, kapok, or the like), bast fibers (hemp, flax, ramie, cannabis, jute, or the like), vein fibers (manila hemp, sisal hemp, or the like), palm fibers, juncus, straw, animal hair fibers (wool, mohair, cashmere, camel hair, alpaca, vicuna, angora, or the like), silk fibers (domestic silk and wild silk), feather, cellulose fibers (rayon, polynosic, cupro, acetate, or the like), and others.

In the present invention, the textile products mean textiles such as woven materials, knitted materials, nonwoven fabrics, and others using the above hydrophobic fibers or hydrophilic fibers, and products obtained using them, including undershirts, T-shirts, dress shirts, blouses, slacks, hats, handkerchiefs, towels, bedding, bedding textile products (sheets,

pillowcases, or the like), knitwear, socks, underwear, tights, masks, and others. Preferable textile products are woven fabrics such as woven materials, knitted materials, or the like, and woven textile products, and preferable textile products are textile products containing hydrophobic fibers from the viewpoint of biofilm bacteria killing.

Examples of the hard articles include hard articles in the living environment such as a washing machine, a washing tub, a washing machine hatch, washing machine lint filters, a washing machine drain pipe, tableware, hard articles around the kitchen, and/or the bathroom, toilet areas, floors, and others, hard articles such as gutters, water distribution pipes, food manufacturing or beverage manufacturing plants, cooling water systems such as industrial cooling towers or the like, medical devices such as endoscopes, catheters, artificial dialysis equipment, or the like, and others.

Examples of the materials of the hard articles include plastic such as polyethylene, polypropylene, or the like (including silicone resin or the like), metal, ceramic, wood, and a combination of those.

The biofilm bactericidal agent composition of the present invention is excellent in bactericidal performance for bacteria existing in a biofilm, and thus can be utilized for killing bacteria on textile products or hard articles not only used in general households but also used for medical or nursing care or the like.

Examples of bacteria for which the biofilm bactericidal agent composition of the present invention is intended include one or more selected from, for example, bacteria of the genus *Moraxella,* bacteria of the genus *Micrococcus,* bacteria of the genus *Methylobacterium,* bacteria of the genus *Acinetobacter,* bacteria of the genus *Pseudomonas,* bacteria of the genus *Bacillus,* bacteria of the genus *Sphingomonas,* bacteria of the genus *Ralstonia,* bacteria of the genus *Cupriavidus,* bacteria of the genus *Psychrobacter,* bacteria of the genus *Serratia,* bacteria of the genus *Escherichia,* bacteria of the genus *Staphylococcus,* bacteria of the genus *Burkholderia,* bacteria of the genus *Listeria,* bacteria of the genus *Shigella,* bacteria of the genus *Vibrio,* bacteria of the genus *Klebsiella,* bacteria of the genus *Salmonella,* and bacteria of the genus *Enterobacter,* or the like.

[Biofilm bactericidal method]

The present invention relates to a biofilm bactericidal method including bringing the biofilm bactericidal agent composition of the present invention or a treatment liquid which is an aqueous dilute solution of the composition (hereinafter also referred to as the treatment liquid of the present invention) into contact with an object article where a biofilm exists.

The treatment liquid of the present invention is prepared by diluting the biofilm bactericidal agent composition of the present invention with water, and thus contains the above components (a) and (b).

In other words, the present invention relates to a biofilm bactericidal method including bringing a treatment liquid (hereinafter also referred to as the treatment liquid of the present invention) into contact with an object article where a biofilm exists, the treatment liquid containing components (a) and (b) and water. Hereinafter, both the treatment liquid which is an aqueous dilute solution of the biofilm bactericidal agent composition of the present invention and the treatment liquid containing components (a) and (b) and water are considered as the treatment liquid of the present invention to give an explanation.

In a preferable method of the biofilm bactericidal method of the present invention, the biofilm bactericidal agent composition of the present invention or the treatment liquid of the present invention is left for a predetermined period of time after bringing it into contact with the object article where a biofilm exists.

"Leaving for a predetermined period of time" refers to bringing the biofilm bactericidal agent composition of the present invention or the treatment liquid of the present invention into contact with the object article where a biofilm exists and then leaving them in contact with each other for a predetermined period of time. The predetermined period of time is preferably 10 seconds or more, more preferably 30 seconds or more, further preferably 1 minute or more, furthermore preferably 3 minutes or more, and furthermore preferably 5 minutes or more, and preferably 1 hour or less, more preferably 50 minutes or less, further preferably 40 minutes or less, furthermore preferably 30 minutes or less, and furthermore preferably 20 minutes or less from the viewpoint of a higher bactericidal effect.

The biofilm bactericidal method of the present invention is carried out using the biofilm bactericidal agent composition of the present invention or the treatment liquid of the present invention, and the aspects described in the biofilm bactericidal agent composition of the present invention can be appropriately applied thereto.

The object article in the biofilm bactericidal method of the present invention is a textile product or a hard article and preferably a textile product.

The aspects of the textile product and the hard article as object articles are the same as the aspects described in the biofilm bactericidal agent composition of the present invention.

Examples of a method for bringing the biofilm bactericidal agent composition of the present invention or the treatment liquid of the present invention into contact with the object article where a biofilm exists include a method in which the biofilm bactericidal agent composition of the present invention or the treatment liquid of the present invention is sprayed on or applied to the object article where a biofilm exists or may exist, or a method in which the object article, for example, a textile product is immersed in the biofilm bactericidal agent composition of the present invention or the treatment liquid of

the present invention. Further, the biofilm bactericidal agent composition of the present invention or the treatment liquid of the present invention may be brought into contact with the object article via a nonwoven fabric impregnated therewith.

When the biofilm bactericidal agent composition of the present invention or the treatment liquid of the present invention is sprayed on or applied to the object article, the biofilm bactericidal agent composition of the present invention or the treatment liquid of the present invention may be filled into a container including a sprayer and sprayed in the form of liquid droplets or in the form of foam, or the biofilm bactericidal agent composition of the present invention or the treatment liquid of the present invention may be poured from a container onto the object article and applied with a brush or the like.

Examples of the container including a sprayer include a manual spray device using no propellant such as a trigger-type spray container, a pump-type spray container, or the like, an aerosol using a propellant, and others.

The container including a sprayer is preferably a trigger-type spray capable of spraying the contents in the form of liquid droplets or in the form of foam, and more preferably a trigger-type spray including a mechanism for spraying the contents in the form of liquid droplets or a trigger-type spray including a mechanism for forming foam (foam forming mechanism).

When the object article, for example, a textile product is immersed in the biofilm bactericidal agent composition of the present invention or the treatment liquid of the present invention, the object article and the biofilm bactericidal agent composition of the present invention or the treatment liquid of the present invention may be left to stand or may be stirred during immersion. When they are stirred, they may be stirred by hand or using a rotary stirrer. The rotary stirrer is a device for stirring the object article and the biofilm bactericidal agent composition of the present invention or the treatment liquid of the present invention by rotating them about a rotation axis. They may be stirred only in a constant direction or may also be stirred in reverse directions in the rotary stirrer. Further, they can be stirred continuously or intermittently.

Examples of a rotary stirrer available to users include, for example, a pulsator washing machine, an agitator washing machine, or a front-loading washing machine.

The biofilm bactericidal method of the present invention is preferably a method in which the textile product where a biofilm exists is immersed in the biofilm bactericidal agent composition of the present invention or the treatment liquid of the present invention and they are stirred using a rotary stirrer.

When the object article is a hard article in the biofilm bactericidal method of the present invention, after being brought into contact with the hard article, the biofilm bactericidal agent composition of the present invention or the treatment liquid of the present invention may be left to stand or may be made to flow, and is preferably made to flow from the viewpoint of more enhancing biofilm bacteria killing. Examples of preferable aspects of a method for making the biofilm bactericidal agent composition of the present invention or the treatment liquid of the present invention flow with respect to the hard article include, for example, a method in which the biofilm bactericidal agent composition or the treatment liquid of the present invention is continuously or intermittently sprayed on the surface of the static hard article, or a method in which the biofilm bactericidal agent composition or the treatment liquid of the present invention where the hard article is immersed is made to flow. Examples of the aspect in which the biofilm bactericidal agent composition or the treatment liquid of the present invention where the hard article is immersed is made to flow include, for example, a method in which the biofilm bactericidal agent composition or the treatment liquid of the present invention where the hard article is immersed is subjected to an external force such as stirring or the like and thus made to flow, or a method in which the hard article immersed in the biofilm bactericidal agent composition or the treatment liquid of the present invention is rotated or shaken.

When the treatment liquid of the present invention is prepared by diluting the biofilm bactericidal agent composition of the present invention with water, a dilution ratio is, for example, 100000 times or less, further 50000 times or less, further 10000 times or less, and further 3000 times or less, and 10 times or more, further 50 times or more, and further 100 times or more from the viewpoint of biofilm bacteria killing.

A content of component (a) in the treatment liquid of the present invention is preferably 0.001 ppm or more, more preferably 0.01 ppm or more, further preferably 0.1 ppm or more, and further 1 ppm or more, and preferably 150000 ppm or less, more preferably 100000 ppm or less, further preferably 50000 ppm or less, further 10000 ppm or less, further 5000 ppm or less, further 1000 ppm or less, further 500 ppm or less, further 100 ppm or less, and further 50 ppm or less from the viewpoint of biofilm bacteria killing.

A content of component (b) in the treatment liquid of the present invention is preferably 0.001 ppm or more, more preferably 0.01 ppm or more, further preferably 0.1 ppm or more, and further 1 ppm or more, and preferably 5000000 ppm or less, more preferably 1000000 ppm or less, further preferably 500000 ppm or less, further 100000 ppm or less, further 50000 ppm or less, further 10000 ppm or less, further 5000 ppm or less, further 1000 ppm or less, further 500 ppm or less, further 100 ppm or less, and further 50 ppm or less from the viewpoint of biofilm bacteria killing.

In the treatment liquid of the present invention, the range of the mass ratio of each component described in the biofilm bactericidal agent composition of the present invention can be applied as-is as the range of the mass ratio of each component in the treatment liquid of the present invention.

The treatment liquid of the present invention has a pH of preferably 1 or more, more preferably 3 or more, further preferably 5 or more, and furthermore preferably 6 or more, and preferably 14 or less, more preferably 12 or less, and

further preferably 10 or less from the viewpoint of biofilm bacteria killing. This pH may be the pH of the treatment liquid of the present invention whose temperature is 25°C. The pH is measured by the same method as the aforementioned method.

A hardness of water used for the preparation of the treatment liquid of the present invention is preferably 0°dH or more, more preferably 1°dH or more, and further preferably 3°dH or more, and preferably 30°dH or less, more preferably 25°dH or less, further preferably 20°dH or less, furthermore preferably 10°dH or less, and further 5°dH or less by German hardness from the viewpoint of biofilm bacteria killing.

Further, a hardness of the treatment liquid of the present invention may fall within the above range.

Here, German hardness (°dH) as used herein refers to the concentration of calcium and magnesium in water expressed in terms of a $CaCO_3$ equivalent concentration, and 1 mg/L (ppm) = approximately 0.056°dH (1°dH = 17.8 ppm).

This concentration of calcium and magnesium for German hardness is determined by a chelate titration method using an ethylenediaminetetraacetic acid disodium salt.

A specific method for measuring the German hardness of water as used herein is described below.

<Method for measuring German hardness of water>

[Reagent]

- · 0.01 mol/l EDTA·2Na solution: a 0.01 mol/l aqueous solution of disodium ethylenediaminetetraacetate (a solution for titration, 0.01 M EDTA-2Na, manufactured by Sigma-Aldrich)
- · Universal BT as an indicator (product name: Universal BT, manufactured by DOJINDO LABORATORIES)
- · Ammonia buffer solution for hardness measurement (a solution obtained by dissolving 67.5 g of ammonium chloride in 570 ml of a 28 w/v% ammonia solution and making the total amount 1000 ml with ion-exchanged water)

[Measurement of hardness]

(1) 20 ml of water as a sample is collected into a conical beaker with a volumetric pipette.
(2) 2 ml of the ammonia buffer solution for hardness measurement is added.
(3) 0.5 ml of Universal BT as an indicator is added. It is confirmed that the solution after the addition is reddish purple.
(4) While the conical beaker is shaken well, the 0.01 mol/l EDTA·2Na solution is added dropwise from a burette, and the point of time when the water as a sample turns blue is taken as the end point of titration. (5) The total hardness is determined by the following calculation formula:

$$\text{hardness (°dH)} = T \times 0.01 \times F \times 56.0774 \times 100 / A$$

T: titration amount of 0.01 mol/l EDTA·2Na solution (mL)
A: sample volume (20 mL, volume of water as a sample)
F: factor for 0.01 mol/l EDTA·2Na solution

When the textile product where a biofilm exists is immersed in the treatment liquid of the present invention, a period of time during which the textile product is immersed therein (brought into contact therewith) is preferably 10 seconds or more, more preferably 1 minute or more, and further preferably 5 minutes or more, and preferably 1 day or less, more preferably 15 hours or less, and further preferably 5 hours or less from the viewpoint of biofilm bacteria killing.

After immersion, the textile product is rinsed with water and dried. Rinsing may be carried out using water in conformance with a publicly-known method such as washing the textile product or the like. Examples of water used for rinsing in the present invention include, but are not particularly limited to, tap water, well water, ion-exchanged water, sterile water, distilled water, and others.

When the biofilm bactericidal agent composition of the present invention or the treatment liquid of the present invention is sprayed on or applied to the object article, a use amount of the biofilm bactericidal agent composition of the present invention or the treatment liquid of the present invention is not particularly limited, but can be, for example, preferably 0.0001 g or more and more preferably 0.001 g or more, and preferably 100 g or less and more preferably 10 g or less in terms of the amount of component (a) per square centimeter of a unit area of the object article from the viewpoint of biofilm bacteria killing.

When the biofilm bactericidal agent composition of the present invention or the treatment liquid of the present

invention is sprayed on or applied to the object article, a period of time during which the biofilm bactericidal agent composition of the present invention or the treatment liquid of the present invention is brought into contact with the object article where a biofilm exists (a period of time during which they are left) is preferably 10 seconds or more, more preferably 1 minute or more, and further preferably 5 minutes or more, and preferably 1 day or less, more preferably 15 hours or less, and further preferably 5 hours or less from the viewpoint of biofilm bacteria killing.

After contact, the object article may be dried as-is, wiped with clean fabric or the like, or rinsed with water. When the object article is rinsed, the object article may be subjected to an external force (physical force) from a sponge or the like or may be simply rinsed with a stream of water.

When the biofilm bactericidal agent composition of the present invention or the treatment liquid of the present invention is brought into contact with the object article via a nonwoven fabric impregnated therewith, a nonwoven fabric processed into the form of a sheet can be used, and the fibers of which the nonwoven fabric is made are preferably made of one or more types of fibers selected from the above hydrophilic fibers and hydrophobic fibers.

A method for bringing the composition or the treatment liquid into contact with the object article may be pressing the nonwoven fabric impregnated with the biofilm bactericidal agent composition of the present invention or the treatment liquid of the present invention against the object article and applying an external force in the range that it does not damage the object to allow the biofilm bactericidal agent composition of the present invention or the treatment liquid which is an aqueous dilute solution of the composition to be transferred to and brought into contact with the object article via the nonwoven fabric impregnated therewith, and may be any of scrubbing, rubbing, and tapping.

The biofilm bactericidal agent composition of the present invention is suitably used for killing bacteria in a biofilm adhering to a textile product or a hard article.

In other words, the present invention provides use of a composition containing the above components (a) and (b) for killing bacteria in a biofilm adhering to a textile product or a hard article.

The composition containing the above components (a) and (b) is the same as the biofilm bactericidal agent composition of the present invention, and the specific aspects of components (a) and (b) are also the same. The aspects described in the biofilm bactericidal agent composition of the present invention can be appropriately applied to the specific aspects of the above composition. Further, the aspects described in the biofilm bactericidal method of the present invention can be appropriately applied to the use aspects of the above composition.

In addition to the aforementioned embodiments, the present invention discloses the aspects below.

<1>

A biofilm bactericidal agent composition containing the following components (a) and (b),
component (a): one or more compounds selected from (a1) a compound represented by the following general formula (a1) (hereinafter referred to as component (a1)) and (a2) a bispyridinium compound (hereinafter referred to as component (a2)),

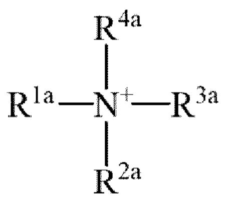

$X^-$ (a1)

wherein in the general formula (a1), $R^{1a}$ and $R^{2a}$ are each independently a linear or branched alkyl group with 8 carbons, $R^{3a}$ and $R^{4a}$ are each independently a linear or branched alkyl group with 1 or more and 3 or less carbons, and $X^-$ is an anion, and
component (b): an anionic surfactant including one or more compounds selected from (b1) a compound represented by the following general formula (b1) (hereinafter referred to as component (b1)) and (b2) an internal olefin sulfonate with 14 or more and 20 or less carbons (hereinafter referred to as component (b2)),

$$R^{1b}\text{-O-}[(PO)_p/(EO)_q]\text{-}SO_3M \qquad (b1)$$

wherein in the general formula (b1), $R^{1b}$ is a hydrocarbon group with 8 or more and 22 or less carbons, PO is a propyleneoxy group, EO is an ethyleneoxy group, "/" is a symbol indicating that the order in which PO and EO are bonded is unrestricted, p is an average number of added moles of PO and is a number of 0 or more and 10 or less, q is an average number of added moles of EO and is a number of 0 or more and 25 or less, and M is a hydrogen ion, an alkali metal ion, an alkaline earth metal ion (1/2 atom), an ammonium ion, or an organic ammonium ion.

<2>

The biofilm bactericidal agent composition according to <1>, wherein in the general formula (b1) of component (b1), $R^{1b}$ is a hydrocarbon group, preferably a linear or branched alkyl group or a linear or branched alkenyl group, more preferably a linear or branched alkyl group, and further preferably a linear alkyl group with 8 or more, preferably 10 or more, and more preferably 12 or more, and 22 or less, preferably 20 or less, more preferably 18 or less, and further preferably 16 or less carbons,
p is a number of 0 or more, preferably **0.1 or** more, more preferably **0.2** or more, further preferably **0.3** or more, furthermore preferably **0.5** or more, further preferably 1 or more, and furthermore preferably 2 or more, and 10 or less, preferably 8 or less, more preferably 5 or less, further preferably 3 or less, and furthermore preferably 2.5 or less,
q is a number of 0 or more, preferably 0.5 or more, more preferably 1 or more, and furthermore preferably 2 or more, and 25 or less, preferably 8 or less, more preferably 5 or less, and further preferably 3 or less, and
M is a hydrogen ion, an alkali metal ion, an alkaline earth metal ion (1/2 atom), an ammonium ion, or an organic ammonium ion, and preferably a hydrogen ion, a sodium ion, a potassium ion, a calcium ion, a magnesium ion, or an alkanolamine having 1 to 3 alkanol groups with 2 or 3 carbons (preferably monoethanolamine, diethanolamine, or triethanolamine).

<3>

The biofilm bactericidal agent composition according to <1>, wherein in the general formula (b1) of component (b1), $R^{1b}$ is a linear or branched alkyl group or a linear or branched alkenyl group, more preferably a linear or branched alkyl group, and further preferably a linear alkyl group with 12 or more and 16 or less carbons,
p is a number of 0.3 or more, furthermore preferably 0.5 or more, furthermore preferably 1 or more, and furthermore preferably 2 or more, and 8 or less, more preferably 5 or less, further preferably 3 or less, and furthermore preferably 2.5 or less,
q is a number of 0 or more, preferably 0.5 or more, more preferably 1 or more, and further preferably 2 or more, and 25 or less, preferably 8 or less, more preferably 5 or less, and further preferably 3 or less, and
M is a hydrogen ion, an alkali metal ion, an alkaline earth metal ion (1/2 atom), an ammonium ion, or an organic ammonium ion, and preferably a hydrogen ion, a sodium ion, a potassium ion, a calcium ion, a magnesium ion, or an alkanolamine having 1 to 3 alkanol groups with 2 or 3 carbons (preferably monoethanolamine, diethanolamine, or triethanolamine).

<4> The biofilm bactericidal agent composition according to any of <1> to <3>, wherein in the general formula (b1) of component (b1), $R^{1b}$ is a linear or branched alkyl group and further preferably a linear alkyl group with 12 or more and 16 or less carbons,

p is a number of 0.3 or more and 8 or less, preferably 0.3 or more and 5 or less, more preferably 0.5 or more and 3 or less, and furthermore preferably 0.5 or more and 2.5 or less,
q is a number of 0 or more and 8 or less, preferably 0 or more and 5 or less, more preferably 0 or more and 3 or less, and furthermore preferably 0 or more and 2.5 or less, and
M is a hydrogen ion, an ammonium ion, a sodium ion, a potassium ion, a calcium ion, a magnesium ion, or an alkanolamine having 1 to 3 alkanol groups with 2 or 3 carbons (preferably monoethanolamine, diethanolamine, or triethanolamine).

<5>
The biofilm bactericidal agent composition according to any of <1> to <4>, wherein component (b2) is an internal olefin sulfonate with 16 or more and 18 or less carbons.
<6>
The biofilm bactericidal agent composition according to any of <1> to <5>, wherein component (b) is an anionic surfactant including one or more compounds selected from component (b1) of the general formula (b1), in which $R^{1b}$ is an alkyl group with 12 or more and 16 or less carbons, p is 0.3 or more and 5 or less, and q is 0 or more and 3 or less, and the internal olefin sulfonate of component (b2), which has 16 or more and 18 or less carbons.
<7>
The biofilm bactericidal agent composition according to any of <1> to <6>, wherein a content of components (b1) and (b2) in component (b) is 70 mass% or more, more preferably 80 mass% or more, and further preferably 90 mass% or more, and preferably 100 mass% or less and more preferably 100 mass%.
<8>

The biofilm bactericidal agent composition according to any of <1> to <7>, wherein a content of components (b1) and (b2) in component (b) is 90 mass% or more and 100 mass% or less, and preferably 100 mass%.

<9>

The biofilm bactericidal agent composition according to any of <1> to <8>, wherein component (a2) is octenidine dihydrochloride.

<10>

The biofilm bactericidal agent composition according to any of <1> to <9>, wherein a mass ratio of a content of component (a) to a content of component (b) in the biofilm bactericidal agent composition, (a)/(b), is 0.005 or more, more preferably 0.01 or more, further preferably 0.02 or more, furthermore preferably 0.1 or more, furthermore preferably 0.12 or more, furthermore preferably 0.15 or more, furthermore preferably 0.3 or more, furthermore preferably 0.5 or more, and furthermore preferably 0.7 or more, and 30 or less, more preferably 20 or less, further preferably 10 or less, furthermore preferably 7 or less, furthermore preferably 5 or less, furthermore preferably 3 or less, furthermore preferably 2 or less, furthermore preferably 1.5 or less, and furthermore preferably 1 or less.

<11>

The biofilm bactericidal agent composition according to any of <1> to <10>, wherein the biofilm bactericidal agent composition further contains water, and in the biofilm bactericidal agent composition, a content of component (a) is 0.001 mass% or more, preferably 0.01 mass% or more, more preferably **0.1** mass% or more, further preferably 1 mass% or more, furthermore preferably 3 mass% or more, furthermore preferably 6 mass% or more, furthermore preferably 9 mass% or more, and furthermore preferably 12 mass% or more, and preferably 80 mass% or less, more preferably 70 mass% or less, further preferably 50 mass% or less, furthermore preferably 30 mass% or less, furthermore preferably 25 mass% or less, furthermore preferably 20 mass% or less, and furthermore preferably 15 mass% or less, and a content of component (b) is 0.001 mass% or more, more preferably 0.01 mass% or more, further preferably 0.1 mass% or more, furthermore preferably 1 mass% or more, furthermore preferably 3 mass% or more, furthermore preferably 6 mass% or more, furthermore preferably 9 mass% or more, and furthermore preferably 12 mass% or more, and preferably 80 mass% or less, more preferably 70 mass% or less, further preferably 50 mass% or less, furthermore preferably 30 mass% or less, furthermore preferably 25 mass% or less, furthermore preferably 20 mass% or less, and furthermore preferably 15 mass% or less.

<12>

The biofilm bactericidal agent composition according to any of <1> to <11>, wherein the composition is used for textile products.

<13>

A biofilm bactericidal method including bringing the biofilm bactericidal agent composition according to any of <1> to <12> or a treatment liquid which is an aqueous dilute solution of the composition into contact with an object article where a biofilm exists.

<14>

The biofilm bactericidal method according to <13>, wherein the bactericidal agent composition or the treatment liquid is left for 10 seconds or more and 1 hour or less after bringing it into contact with the object article where a biofilm exists.

<15>

The biofilm bactericidal method according to <13> or <14>, wherein the biofilm bactericidal agent composition or the treatment liquid brought into contact with the object article is made to flow.

<16>

The biofilm bactericidal method according to any of <13> to <15>, wherein the object article is a textile product.

<17>

A biofilm bactericidal method including bringing a treatment liquid into contact with an object article where a biofilm exists, the treatment liquid containing the following components (a) and (b) and water,

component (a): one or more compounds selected from (a1) a compound represented by the following general formula (a1) (hereinafter referred to as component (a1)) and (a2) a bispyridinium compound (hereinafter referred to as component (a2)),

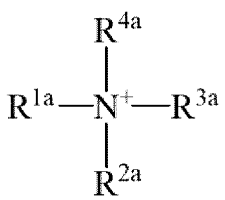

$X^-$ (a1)

wherein in the general formula (a1), $R^{1a}$ and $R^{2a}$ are each independently a linear or branched alkyl group with 8

carbons, $R^{3a}$ and $R^{4a}$ are each independently a linear or branched alkyl group with 1 or more and 3 or less carbons, and $X^-$ is an anion, and

component (b): an anionic surfactant including one or more compounds selected from (b1) a compound represented by the following general formula (b1) (hereinafter referred to as component (b1)) and (b2) an internal olefin sulfonate with 14 or more and 20 or less carbons (hereinafter referred to as component (b2)),

$$R^{1b}\text{-O-[(PO)}_p\text{/(EO)}_q\text{]-SO}_3\text{M} \qquad (b1)$$

wherein in the general formula (b1), $R^{1b}$ is a hydrocarbon group with 8 or more and 22 or less carbons, PO is a propyleneoxy group, EO is an ethyleneoxy group, "/" is a symbol indicating that the order in which PO and EO are bonded is unrestricted, p is an average number of added moles of PO and is a number of 0 or more and 10 or less, q is an average number of added moles of EO and is a number of 0 or more and 25 or less, and M is a hydrogen ion, an alkali metal ion, an alkaline earth metal ion (1/2 atom), an ammonium ion, or an organic ammonium ion.

<18>
The biofilm bactericidal method according to <17>, wherein a mass ratio of a content of component (a) to a content of component (b) in the treatment liquid, (a)/(b), is 0.005 or more, more preferably 0.01 or more, further preferably 0.02 or more, furthermore preferably 0.1 or more, furthermore preferably 0.12 or more, furthermore preferably 0.15 or more, furthermore preferably 0.3 or more, furthermore preferably 0.5 or more, and furthermore preferably 0.7 or more, and 30 or less, more preferably 20 or less, further preferably 10 or less, furthermore preferably 7 or less, furthermore preferably 5 or less, furthermore preferably 3 or less, furthermore preferably 2 or less, furthermore preferably 1.5 or less, and furthermore preferably 1 or less.
<19>

The biofilm bactericidal method according to <17> or <18>, wherein a content of component (a) in the treatment liquid is 0.001 ppm or more, preferably 0.01 ppm or more, more preferably 0.1 ppm or more, and further 1 ppm or more, and 150000 ppm or less, preferably 100000 ppm or less, more preferably 50000 ppm or less, further preferably 10000 ppm or less, furthermore preferably 5000 ppm or less, furthermore preferably 1000 ppm or less, furthermore preferably 500 ppm or less, furthermore preferably 100 ppm or less, and furthermore preferably 50 ppm or less, and

a content of component (b) in the treatment liquid is 0.001 ppm or more, preferably 0.01 ppm or more, more preferably 0.1 ppm or more, and further 1 ppm or more, and 5000000 ppm or less, more preferably 1000000 ppm or less, further preferably 500000 ppm or less, furthermore preferably 100000 ppm or less, furthermore preferably 50000 ppm or less, furthermore preferably 10000 ppm or less, furthermore preferably 5000 ppm or less, furthermore preferably 1000 ppm or less, furthermore preferably 500 ppm or less, further 100 ppm or less, and furthermore preferably 50 ppm or less.

<20>
The biofilm bactericidal method according to any of <17> to <19>, wherein the treatment liquid is left for 10 seconds or more, more preferably 30 seconds or more, further preferably 1 minute or more, furthermore preferably 3 minutes or more, and furthermore preferably 5 minutes or more, and preferably 1 hour or less, more preferably 50 minutes or less, further preferably 40 minutes or less, furthermore preferably 30 minutes or less, and furthermore preferably 20 minutes or less after bringing it into contact with the object article where a biofilm exists.
<21> The biofilm bactericidal method according to any of <17> to <20>, wherein the treatment liquid brought into contact with the object article where a biofilm exists is made to flow.
<22>

Use of a composition containing the following components (a) and (b) and water for killing bacteria in a biofilm adhering to a textile product or a hard article,

component (a): one or more compounds selected from (a1) a compound represented by the following general formula (a1) (hereinafter referred to as component (a1)) and (a2) a bispyridinium compound (hereinafter referred to as component (a2)),

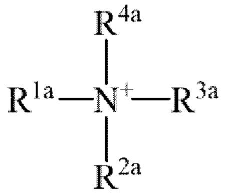

$X^-$ (a1)

wherein in the general formula (a1), $R^{1a}$ and $R^{2a}$ are each independently a linear or branched alkyl group with 8 carbons, $R^{3a}$ and $R^{4a}$ are each independently a linear or branched alkyl group with 1 or more and 3 or less carbons, and $X^-$ is an anion, and

component (b): an anionic surfactant including one or more compounds selected from (b1) a compound represented by the following general formula (b1) (hereinafter referred to as component (b1)) and (b2) an internal olefin sulfonate with 14 or more and 20 or less carbons (hereinafter referred to as component (b2)),

$$R^{1b}\text{-O-}[(PO)_p/(EO)_q]\text{-}SO_3M \qquad \text{(b1)}$$

wherein in the general formula (b1), $R^{1b}$ is a hydrocarbon group with 8 or more and 22 or less carbons, PO is a propyleneoxy group, EO is an ethyleneoxy group, "/" is a symbol indicating that the order in which PO and EO are bonded is unrestricted, p is an average number of added moles of PO and is a number of 0 or more and 10 or less, q is an average number of added moles of EO and is a number of 0 or more and 25 or less, and M is a hydrogen ion, an alkali metal ion, an alkaline earth metal ion (1/2 atom), an ammonium ion, or an organic ammonium ion.

<23>

Use of the composition according to <22> for killing bacteria in a biofilm adhering to a textile product or a hard article, wherein in the general formula (b1) of component (b1), $R^{1b}$ is a linear or branched alkyl group and further preferably a linear alkyl group with 12 or more and 16 or less carbons,

p is a number of 0.3 or more and 8 or less, preferably 0.3 or more and 5 or less, more preferably 0.5 or more and 3 or less, and furthermore preferably 0.5 or more and 2.5 or less,

q is a number of 0 or more and 8 or less, preferably 0 or more and 5 or less, more preferably 0 or more and 3 or less, and furthermore preferably 0 or more and 2.5 or less, and

M is a hydrogen ion, an ammonium ion, a sodium ion, a potassium ion, a calcium ion, a magnesium ion, or an alkanolamine having 1 to 3 alkanol groups with 2 or 3 carbons (preferably monoethanolamine, diethanolamine, or triethanolamine).

<24>
Use of the composition according to <22> or <23> for killing bacteria in a biofilm adhering to a textile product or a hard article, wherein component (b2) is an internal olefin sulfonate with 16 or more and 18 or less carbons.
<25>
Use of the composition according to any of <22> to <24> for killing bacteria in a biofilm adhering to a textile product or a hard article, wherein component (b) is an anionic surfactant including one or more compounds selected from component (b1) of the general formula (b1), in which $R^{1b}$ is an alkyl group with 12 or more and 16 or less carbons, p is 0.3 or more and 5 or less, and q is 0 or more and 3 or less, and the internal olefin sulfonate of component (b2), which has 16 or more and 18 or less carbons.
<26>
Use of the composition according to any of <22> to <25> for killing bacteria in a biofilm adhering to a textile product or a hard article, wherein a content of components (b1) and (b2) in component (b) is 70 mass% or more, more preferably 80 mass% or more, and further preferably 90 mass% or more, and preferably 100 mass% or less and more preferably 100 mass%.
<27>
Use of the composition according to any of <22> to <26> for killing bacteria in a biofilm adhering to a textile product or a hard article, wherein a content of components (b1) and (b2) in component (b) is 90 mass% or more and 100 mass% or less, and preferably 100 mass%.
<28>
Use of the composition according to any of <22> to <27> for killing bacteria in a biofilm adhering to a textile product or a hard article, wherein component (a2) is octenidine dihydrochloride.
<29>
Use of the composition according to any of <22> to <28> for killing bacteria in a biofilm adhering to a textile product or a

hard article, wherein a mass ratio of a content of component (a) to a content of component (b) in the composition, (a)/(b), is 0.005 or more, more preferably 0.01 or more, further preferably 0.02 or more, furthermore preferably 0.1 or more, furthermore preferably 0.12 or more, furthermore preferably 0.15 or more, furthermore preferably 0.3 or more, furthermore preferably 0.5 or more, and furthermore preferably 0.7 or more, and 30 or less, more preferably 20 or less, further preferably 10 or less, furthermore preferably 7 or less, furthermore preferably 5 or less, furthermore preferably 3 or less, furthermore preferably 2 or less, furthermore preferably 1.5 or less, and furthermore preferably 1 or less.

Examples

[Formulation component]

In examples and comparative examples, the components below were used.

<Component (a)>

· Q-D08: dioctyldimethylammonium chloride, a compound of the general formula (a1) in which $R^{1a}$ and $R^{2a}$ are alkyl groups with 8 carbons, $R^{3a}$ and $R^{4a}$ are methyl groups, and $X^-$ is a chloride ion, component (a1)
· Octenidine: octenidine dihydrochloride, a compound of the general formula (a22) in which each $R^{5a}$ is an n-octyl group, Y is an n-decenyl group, A is Cl, q is 1, and r is 2, component (a2), the trade name "Octenidine Dihydrochloride," manufactured by Tokyo Chemical Industry Co., Ltd.

<Component (a') (comparative component of component (a))>

· C10DMAB: didecyldimethylammonium bromide, a compound of the general formula (a1) in which $R^{1a}$ and $R^{2a}$ are alkyl groups with 10 carbons, $R^{3a}$ and $R^{4a}$ are methyl groups, and $X^-$ is a bromide ion, the trade name "Didecyldimethylammonium Bromide," manufactured by Tokyo Chemical Industry Co., Ltd.
· Q-D10: didecyldimethylammonium chloride, a compound of the general formula (a1) in which $R^{1a}$ and $R^{2a}$ are alkyl groups with 10 carbons, $R^{3a}$ and $R^{4a}$ are methyl groups, and $X^-$ is a chloride ion

<Component (b)>

· AS: an alkyl sulfate, a compound of the general formula (b1) in which $R^{1b}$ is an alkyl group with 12 carbons, p is 0, q is 0, and M is a sodium ion, component (b1), the trade name "Sodium Dodecyl Sulfate," manufactured by Tokyo Chemical Industry Co., Ltd.
· ApS: a partially PO-added alkyl ether sulfate, a compound of the general formula (b1) in which $R^{1b}$ is an alkyl group with 8 to 12 carbons, p is 0.6, q is 0, and M is a sodium ion, component (b1)
· ES: a polyoxyethylene alkyl ether sulfate, a compound of the general formula (b1) in which $R^{1b}$ is an alkyl group with 10 to 16 carbons, p is 0, q is 2, and M is a sodium ion, component (b1), the trade name "EMAL 227," manufactured by Kao Corporation
· C12APES: a polyoxypropylene polyoxyethylene alkyl ether sulfate having an alkyl group with 12 carbons, a compound of the general formula (b1) in which $R^{1b}$ is an alkyl group with 12 carbons, p is 2, q is 2, and M is monoethanolammonium, component (b1)
· C16IOS: an internal olefin sulfonic acid potassium salt with 16 carbons, component (b2)

<Component (b') (comparative component of component (b))>

- LAS (linear alkylbenzene sulfonate), the trade name "NEOPELEX G-25," manufactured by Kao Corporation
- RLM45NV: sodium polyoxyethylene (4.5) lauryl ether acetate (the numeral in the parentheses is the average number of added moles of oxyethylene groups)
- Sodium stearate

[Preparation of biofilm bactericidal agent composition]

A method for preparing the biofilm bactericidal agent compositions shown in Tables 1 to 7 is as described below. A Teflon stirrer bar with a length of 3 cm was put in a glass beaker with a capacity of 200 mL. Next, 10 g of ion-exchanged water and component (a) or (a') and component (b) or (b') in a formulation shown in Tables 1 to 7 were put therein and stirred at 100 r/min for 10 minutes, and ion-exchanged water was added in the equivalent of 95 mass% of the additionally put-in amount necessary to make the total amount 100 g and stirring was carried out at 100 r/min for 5 minutes. After that, the pH (25°C) was adjusted to 8 with monoethanolamine or hydrochloric acid (in Examples 35 and 36 in Table 7, the pH was adjusted to those shown in the table). Ion-exchanged water was added to make the total amount 100 g and stirring was carried out at 100 r/min for 15 minutes, and each biofilm bactericidal agent composition in the formulation shown in Tables 1 to 7 was obtained then. After preparation, the pH of each biofilm bactericidal agent composition in Tables 1 to 7 was checked again, and the pH remained unchanged from the pH when it was adjusted. Note that the formulation amounts of the components in the biofilm bactericidal agent compositions in Tables 1 to 7 are all on an active component basis. Further, the formulation amounts of the components shown for Example 29 in Table 4 are those in a test treatment liquid after dilution, as described later.

[Biofilm bactericidal performance evaluation]

(1-1) Preparation of biofilm-formed fabric

Glycerol stock solutions of *Rhodotorula mucilaginosa* (a strain isolated from clothing) and *Methylobacterium variabile* (a strain isolated from clothing) were spread onto potato dextrose agar (manufactured by Difco Laboratories Inc), and incubation was carried out statically at 30°C for 2 days. A glycerol stock solution of *Moraxella osloensis* (a strain isolated from clothing) was spread onto SCD agar (manufactured by SHIOTANI M.S. CO., LTD, the SCD agar "DAIGO," for general bacterial testing), and incubation was carried out statically at 37°C for one day. The bacteria after incubation were each scraped off with a disposable loop (manufactured by AS ONE Corporation, Disposable Loop Type 10), and suspended in an R2A medium (manufactured by SHIOTANI M.S. CO., LTD, the R2A medium "DAIGO"). The turbidity (OD600) of each bacterial suspension was measured using a spectrophotometer (manufactured by APEL Co., Ltd., model number: PD-303S), and the bacterial solutions were diluted such that OD600 = 0.2 for *R. mucilaginosa,* and OD600 = 0.01 for *M. variabile* and *M. osloensis.*

Plain-woven cotton fabric (manufactured by Tanigashira Shoten, Cotton 2003) cut to 3 $\times$ 3 cm was sterilized under pressure in an autoclave (manufactured by PHC Corporation, the high-pressure steam sterilizer Laboratory Autoclave, model number: MLS-3781). The plain-woven cotton fabric after sterilization was placed in a No. 6 screw bottle (manufactured by Maruemu Corporation, Screw Bottle No. 6), and 1 mL of each of the bacterial solutions of the above three types of bacteria and 7 mL of an R2A medium were added. The bottle was capped and sealed tightly, and shaking incubation was carried out for 2 days under the conditions of 30°C and 200 rpm in the small-sized constant-temperature shaking incubator Bioshaker (manufactured by TAITEC CORPORATION, model number: BR-23FP). The plain-woven cotton fabric after incubation was transferred to a new No. 6 screw bottle, and 10 mL of autoclave-sterilized ion-exchanged water was added. Shaking washing was carried out for 3 minutes at 25°C and 150 rpm in the small-sized constant-temperature shaking incubator Bioshaker. The plain-woven cotton fabric after washing was air-dried for one hour in a safety cabinet to obtain biofilm-formed fabric.

Biofilm formation on the fabric was checked by loosening the fabric into threads with tweezers, staining the threads, and observing them with a confocal laser scanning microscope (manufactured by Carl Zeiss Co., Ltd, LSM 880 ZEN). The threads to be observed were stained for 30 minutes with a live cell staining dye (manufactured by DOJINDO LABORATORIES, C375-Cellstain™-CFSE), a dead cell staining dye (manufactured by DOJINDO LABORATORIES, P378-Cellstain™-PI solution), a cellulose staining dye (manufactured by Sigma-Aldrich, Calcofluor White Stain), a sugar staining dye (manufactured by Thermo Fisher Scientific, Lectin PNA From Arachis hypogaea (peanut), Alexa Fluor™ 647 Conjugate), and a sugar staining dye (manufactured by Thermo Fisher Scientific, Concanavalin Alexa Fluor™ 647 Conjugate).

(1-2) Preparation of biofilm-formed hard surface

In Example 31 in Table 5, after 0.3 mL of each of the bacterial solutions of the above three types of bacteria and 2.1 mL of an R2A medium were added to each well of a polystyrene 6-well plate (manufactured by Corning Incorporated, Falcon Cell Culture 6-well Multiwell Plate, Flat Bottom, with lid) and the plate was covered with a lid and sealed tightly, incubation was carried out statically at 30°C for 2 days. The upper-layer liquid in the 6-well plate after incubation was sucked up, and the plate was air-dried for one hour in a safety cabinet to obtain a biofilm-formed hard surface.

Biofilm formation on the hard surface was checked by observation using a digital microscope (manufactured by

KEYENCE CORPORATION, VHX-7000).

(2) Biofilm bactericidal test

(Biofilm bactericidal evaluation)

The prepared biofilm-formed fabric was cut to 1.5 × 1.5 cm, and sterilized plain-woven cotton fabric was cut to 1.5 × 3 cm. One piece of the cut biofilm-formed fabric plus two pieces of the cut sterilized plain-woven fabric, i.e., three pieces in total, were stacked together and placed in a 5-mL tube (manufactured by Eppendorf SE, Eppendorf Tubes 5.0 mL, model number: 0030 119.401). 3 mL of a test treatment liquid obtained by diluting each biofilm bactericidal agent composition in Tables 1 to 7 3000 times with model tap water (4°dH) was added thereto (as shown in Table 4, the test treatment liquid after dilution used in Example 29 had the concentrations shown in the table, and a composition with the concentrations shown in the table was used as-is without dilution in Example 30; and further, in Examples 32, 33, and 34 in Table 6, test treatment liquids were prepared by changing the hardness of the model tap water for diluting the compositions 3000 times to those shown in the table) and shaking washing was carried out for 10 minutes at 25°C and 150 rpm in the small-sized constant-temperature shaking incubator Bioshaker, and this was a washing step. The fabric after washing was transferred to a 5-mL tube containing 3 mL of the model tap water and shaking washing was carried out for 3 minutes under the same conditions, and this was a rinsing step. After the washing step and the rinsing step were alternately repeated four times, only the biofilm-formed fabric was removed and air-dried for 30 minutes in a safety cabinet.

For the biofilm-formed hard surface, 3 mL of a test treatment liquid obtained by diluting the biofilm bactericidal agent composition of Example 31 in Table 5 30,000 times with the model tap water (4°dH) was added to each well and shaking washing was carried out for 10 minutes at 25°C and 150 rpm in the small-sized constant-temperature shaking incubator Bioshaker, and this was a washing step. The test treatment liquid in Bioshaker after washing was sucked up with a micropipette (manufactured by Eppendorf SE, Eppendorf Research® plus), 3 mL of the model tap water was added, and shaking washing was carried out for 3 minutes under the same conditions, and this was a rinsing step. After the washing step and the rinsing step were alternately repeated four times, the model tap water in Bioshaker after rinsing was sucked up with a micropipette, and the biofilm-formed hard surface after rinsing was air-dried for 30 minutes in a safety cabinet.

(Measurement of number of remaining viable bacteria)

The biofilm-formed fabric after air-drying and the biofilm-formed fabric before contact with a test treatment liquid were each placed in a 1.5-mL tube (manufactured by Eppendorf SE, Eppendorf Tubes 1.5 mL, model number: 0030 125.150) containing 1 mL of an LP diluent solution (manufactured by SHIOTANI M.S. CO., LTD, the LP diluent solution "DAIGO"). With the cap on, each tube was placed in an ultrasonic cleaner (manufactured by Emerson Japan, Ltd., desktop ultrasonic cleaner, model number: 2510JDTH) for 15 minutes to disperse the bacteria remaining on the fabric into the LP diluent solution. After the solution was stirred with a vortex mixer (manufactured by AS ONE Corporation, vortex mixer, model number: VTX-3000L) for 3 seconds, serial 10-fold dilutions of this bacterial solution with the LP diluent solution were carried out, and 100 μL of each dilute solution was dispensed into a petri dish (manufactured by AS ONE Corporation, ASNOL Petri Dish, diameter 90 mm, height 15 mm). After about 15 mL of SCD agar was added thereto, a lid was put thereon, and gentle mixing was carried out, it was left to stand at room temperature until the agar solidified. After static incubation at 37°C for one day, the number of remaining viable bacteria of *M. variabile* was counted using a colony counter pen (manufactured by AS ONE Corporation, Colony Counter Pen Type, model number: 2-5764-01).

For the biofilm-formed hard surface, 3 mL of the LP diluent solution was added to each well of the biofilm-formed hard surface after air-drying and the biofilm-formed hard surface before contact with a test treatment liquid. The biofilm was detached from the wells by carrying out pipetting 20 times with a micropipette, and dispersed in the LP diluent solution. Serial 10-fold dilutions of this bacterial solution with the LP diluent solution were carried out, and the number of remaining viable bacteria of *M. variabile* was counted in the same manner as described above.

(Method for calculating biofilm bactericidal activity value)

A biofilm bactericidal activity value was determined by the formula below. The results are shown in Tables 1 to 7. A higher bactericidal activity value indicates superior biofilm bactericidal performance.

Biofilm bactericidal activity value = Log A - Log B

A: average number of remaining viable bacteria before contact with test treatment liquid

B: average number of remaining viable bacteria after contact with test treatment liquid

[Table 1]

| | | | Example 1 | Example 2 | Example 3 | Example 4 | Example 5 | Example 6 | Comparative example 1 | Comparative example 2 |
|---|---|---|---|---|---|---|---|---|---|---|
| Biofilm bactericidal agent composition | Formulation component (mass%) | (a) Q-D08 | 3 | 3 | 3 | 3 | 3 | 3 | 3 | 3 |
| | | (b) C16IOS | 6 | | | 7.5 | | | | |
| | | (b) AS | | 6 | | | 7.5 | | | |
| | | (b) ApS | | | 6 | | | 7.5 | | |
| | | (b') LAS | | | | | | | 6 | 7.5 |
| | | Ion-exchanged water | Balance | Balance | Balance | Balance | Balance | Balance | Balance | Balance |
| | | Total | 100 | 100 | 100 | 100 | 100 | 100 | 100 | 100 |
| | (a)/(b) (mass ratio) | | 0.50 | 0.50 | 0.50 | 0.40 | 0.40 | 0.40 | - | - |
| Evaluation | Bactericidal activity value (Log (cfu/ml)) | | 2.57 | 1.10 | 2.75 | 3.19 | 2.52 | 3.18 | 0.00 | 0.40 |

[Table 2]

| Biofilm bactericidal agent composition | | | Example 7 | Example 8 | Example 9 | Example 10 | Example 11 | Example 12 | Example 13 | Example 14 | Example 15 | Example 16 | Comparative example 3 | Comparative example 4 |
|---|---|---|---|---|---|---|---|---|---|---|---|---|---|---|
| Formulation component (mass%) | (a) | Q-D08 | 3 | 3 | 3 | 3 | 3 | 3 | 3 | 3 | 3 | 3 | 3 | 3 |
| | (b) | C16IOS | 15 | | | | | 22.5 | | | | | | |
| | | AS | | 15 | | | | | 22.5 | | | | | |
| | | ApS | | | 15 | | | | | 22.5 | | | | |
| | | ES | | | | 15 | | | | | 22.5 | | | |
| | | C12APES | | | | | 15 | | | | | 22.5 | | |
| | (b') | LAS | | | | | | | | | | | 15 | 22.5 |
| | Ion-exchanged water | | Balance | Balance | Balance | Balance | Balance | Balance | Balance | Balance | Balance | Balance | Balance | Balance |
| | Total | | 100 | 100 | 100 | 100 | 100 | 100 | 100 | 100 | 100 | 100 | 100 | 100 |
| (a)/(b) (mass ratio) | | | 0.20 | 0.20 | 0.20 | 0.20 | 0.20 | 0.13 | 0.13 | 0.13 | 0.13 | 0.13 | - | - |
| Evaluation | Bactericidal activity value (Log (cfu/ml)) | | 3.23 | 2.75 | 3.68 | 2.04 | 3.23 | 2.94 | 1.82 | 2.32 | 1.36 | 3.04 | 0.36 | 0.66 |

[Table 3]

| | | | Example 17 | Example 18 | Example 19 | Example 20 | Example 21 | Example 22 | Example 23 | Example 24 | Example 25 | Example 26 | Example 27 | Example 28 | Comparative example 5 | Comparative example 6 | Comparative example 7 | Comparative example 8 | Comparative example 9 | Comparative example 10 | Comparative example 11 |
|---|---|---|---|---|---|---|---|---|---|---|---|---|---|---|---|---|---|---|---|---|---|
| Biofilm bactericidal agent composition | Formulation component (mass%) (a) | Q-D08 | 25.5 | 18.6 | 14 | 9.3 | 8 | 4.7 | 3.3 | 2.6 | 2 | 6 | 6 | | 28 | | 6 | 3 | | | 0.2 |
| | (a) | Octenidine | | | | | | | | | | | | 3 | | | | | | | |
| | (a') | C10DMAB | | | | | | | | | | | | | | | | | 3 | | |
| | (a') | Q-D10 | | | | | | | | | | | | | | | | | | 3 | |
| | (b) | C16IOS | 2.6 | 9.3 | 14 | 18.6 | 20 | 23.3 | 24.7 | 25.5 | 26 | 3 | 6 | 6 | | 28 | | | 15 | 15 | |
| | (b') | RLM45NV | | | | | | | | | | | | | | | | 6 | | | |
| | (b') | Sodium stearate | | | | | | | | | | | | | | | | | | | 10 |
| | | Ion-exchanged water | Balance | Balance | Balance | Balance | Balance | Balance | Balance | Balance | Balance | Balance | Balance | Balance | Balance | Balance | Balance | Balance | Balance | Balance | Balance |
| | | Total | 100 | 100 | 100 | 100 | 100 | 100 | 100 | 100 | 100 | 100 | 100 | 100 | 100 | 100 | 100 | 100 | 100 | 100 | 100 |
| | (a)/(b) (mass ratio) | | 9.81 | 2.00 | 1.00 | 0.50 | 0.40 | 0.20 | 0.13 | 0.10 | 0.08 | 2.00 | 1.00 | 0.50 | - | 0 | - | - | 0 | 0 | - |
| Evaluation | Bactericidal activity value (Log (cfu/ml)) | | 1.31 | 2.86 | 4.89 | 4.19 | 3.78 | 2.39 | 2.20 | 1.85 | 1.80 | 1.01 | 2.22 | 1.12 | 0.56 | 0.01 | 0.15 | 0.72 | 0.11 | 0.18 | 0 |

[Table 4]

| | | | | Example | |
|---|---|---|---|---|---|
| | | | | 29 | 30 |
| Biofilm bactericidal agent composition or treatment liquid containing components (a) and (b) and water | Formulation component (ppm) | (a) | Q-D08 | 10 | 30000 |
| | | (b) | C16IOS | 50 | 150000 |
| | | Ion-exchanged water | | Balance | Balance |
| | | Total (mass%) | | 100 | 100 |
| | (a)/(b) (mass ratio) | | | 0.2 | 0.2 |
| Evaluation | Bactericidal activity value (Log (cfu/ml)) | | | 3.23 | 4.79 |

[Table 5]

| | | | | Example | |
|---|---|---|---|---|---|
| | | | | 7 | 31 |
| Biofilm bactericidal agent composition | Formulation component (mass%) | (a) | Q-D08 | 3 | 3 |
| | | (b) | C16IOS | 15 | 15 |
| | | Ion-exchanged water | | Balance | Balance |
| | | Total | | 100 | 100 |
| | | Object surface | | Plain-woven fabric | Polystyrene |
| | (a)/(b) (mass ratio) | | | 0.2 | 0.2 |
| Evaluation | Bactericidal activity value (Log (cfu/ml)) | | | 3.23 | 3.84 |

[Table 6]

| | | | | Example | | | |
|---|---|---|---|---|---|---|---|
| | | | | 32 | 33 | 7 | 34 |
| Biofilm bactericidal agent composition | Formulation component (mass%) | (a) | Q-D08 | 3 | 3 | 3 | 3 |
| | | (b) | C16IOS | 15 | 15 | 15 | 15 |
| | | Ion-exchanged water | | Balance | Balance | Balance | Balance |
| | | Total | | 100 | 100 | 100 | 100 |
| | | Hardness (°DH) | | 0 | 2 | 4 | 20 |
| | (a)/(b) (mass ratio) | | | 0.2 | 0.2 | 0.2 | 0.2 |
| Evaluation | Bactericidal activity value (Log (cfu/ml)) | | | 2.93 | 3.01 | 3.23 | 2.98 |

[Table 7]

| | | | | Example | | |
|---|---|---|---|---|---|---|
| | | | | 35 | 7 | 36 |
| Biofilm bactericidal agent composition | Formulation component (mass%) | (a) | Q-D08 | 3 | 3 | 3 |
| | | (b) | C16IOS | 15 | 15 | 15 |
| | | Ion-exchanged water | | Balance | Balance | Balance |
| | | Total | | 100 | 100 | 100 |
| | | pH (25°C) | | 2 | 8 | 12 |
| | (a)/(b) (mass ratio) | | | 0.2 | 0.2 | 0.2 |
| Evaluation | Bactericidal activity value (Log (cfu/ml)) | | | 3.03 | 3.23 | 3.01 |

## Claims

**1.** A biofilm bactericidal agent composition comprising the following components (a) and (b),

component (a): one or more compounds selected from (a1) a compound represented by the following general formula (a1) (hereinafter referred to as component (a1)) and (a2) a bispyridinium compound (hereinafter referred to as component (a2)),

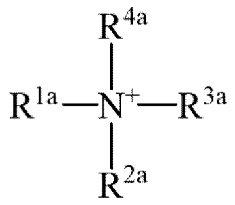

$X^-$ (a1)

wherein in the general formula (a1), $R^{1a}$ and $R^{2a}$ are each independently a linear or branched alkyl group with 8 carbons, $R^{3a}$ and $R^{4a}$ are each independently a linear or branched alkyl group with 1 or more and 3 or less carbons, and $X^-$ is an anion, and
component (b): an anionic surfactant including one or more compounds selected from (b1) a compound represented by the following general formula (b1) (hereinafter referred to as component (b1)) and (b2) an internal olefin sulfonate with 14 or more and 20 or less carbons (hereinafter referred to as component (b2)),

$$R^{1b}\text{-O-}[(PO)_p/(EO)_q]\text{-}SO_3M \qquad (b1)$$

wherein in the general formula (b1), $R^{1b}$ is a hydrocarbon group with 8 or more and 22 or less carbons, PO is a propyleneoxy group, EO is an ethyleneoxy group, "/" is a symbol indicating that the order in which PO and EO are bonded is unrestricted, p is an average number of added moles of PO and is a number of 0 or more and 10 or less, q is an average number of added moles of EO and is a number of 0 or more and 25 or less, and M is a hydrogen ion, an alkali metal ion, an alkaline earth metal ion (1/2 atom), an ammonium ion, or an organic ammonium ion.

**2.** The biofilm bactericidal agent composition according to claim 1, wherein the component (b) is an anionic surfactant including one or more compounds selected from the component (b1) of the general formula (b1), in which p is 0.1 or more and 10 or less and q is 0 or more and 25 or less, and the internal olefin sulfonate of the component (b2), which has 16 or more and 18 or less carbons.

**3.** The biofilm bactericidal agent composition according to claim 1 or 2, wherein a content of the components (b1) and (b2) in the component (b) is 70 mass% or more and 100 mass% or less.

**4.** The biofilm bactericidal agent composition according to any one of claims 1 to 3, wherein the component (a2) is octenidine dihydrochloride.

**5.** The biofilm bactericidal agent composition according to any one of claims 1 to 4, wherein a mass ratio of a content of the component (a) to a content of the component (b), (a)/(b), is 0.005 or more and 30 or less.

**6.** The biofilm bactericidal agent composition according to any one of claims 1 to 5, wherein the composition further comprises water, and a content of the component (a) is 0.001 mass% or more and 15 mass% or less and a content of the component (b) is 0.001 mass% or more and 80 mass% or less.

**7.** The biofilm bactericidal agent composition according to any one of claims 1 to 6, wherein the composition is used for textile products.

**8.** A biofilm bactericidal method comprising bringing the biofilm bactericidal agent composition according to any one of claims 1 to 7 or a treatment liquid which is an aqueous dilute solution of the composition into contact with an object article where a biofilm exists.

**9.** The biofilm bactericidal method according to claim 8, wherein the biofilm bactericidal agent composition or the treatment liquid is left for 10 seconds or more and 1 hour or less after bringing it into contact with the object article where a biofilm exists.

**10.** The biofilm bactericidal method according to claim 8 or 9, wherein the biofilm bactericidal agent composition or the treatment liquid brought into contact with the object article is made to flow.

**11.** The biofilm bactericidal method according to any one of claims 8 to 10, wherein the object article is a textile product.

**12.** A biofilm bactericidal method comprising bringing a treatment liquid into contact with an object article where a biofilm exists, the treatment liquid comprising the following components (a) and (b) and water,

component (a): one or more compounds selected from (a1) a compound represented by the following general formula (a1) (hereinafter referred to as component (a1)) and (a2) a bispyridinium compound (hereinafter referred to as component (a2)),

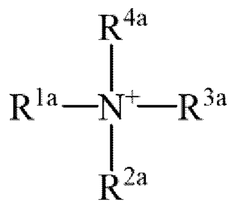 $X^-$ (a1)

wherein in the general formula (a1), $R^{1a}$ and $R^{2a}$ are each independently a linear or branched alkyl group with 8 carbons, $R^{3a}$ and $R^{4a}$ are each independently a linear or branched alkyl group with 1 or more and 3 or less carbons, and $X^-$ is an anion, and
component (b): an anionic surfactant including one or more compounds selected from (b1) a compound represented by the following general formula (b1) (hereinafter referred to as component (b1)) and (b2) an internal olefin sulfonate with 14 or more and 20 or less carbons (hereinafter referred to as component (b2)),

$$R^{1b}\text{-O-}[(PO)_p/(EO)_q]\text{-}SO_3M \qquad (b1)$$

wherein in the general formula (b1), $R^{1b}$ is a hydrocarbon group with 8 or more and 22 or less carbons, PO is a propyleneoxy group, EO is an ethyleneoxy group, "/" is a symbol indicating that the order in which PO and EO are bonded is unrestricted, p is an average number of added moles of PO and is a number of 0 or more and 10 or less, q is an average number of added moles of EO and is a number of 0 or more and 25 or less, and M is a hydrogen ion, an alkali metal ion, an alkaline earth metal ion (1/2 atom), an ammonium ion, or an organic ammonium ion.

**13.** The biofilm bactericidal method according to claim 12, wherein a mass ratio of a content of the component (a) to a content of the component (b) in the treatment liquid, (a)/(b), is 0.005 or more and 30 or less.

**14.** The biofilm bactericidal method according to claim 12 or 13, wherein the treatment liquid is left for 10 seconds or more and 1 hour or less after bringing it into contact with the object article where a biofilm exists.

**15.** Use of a composition comprising the following components (a) and (b) for killing bacteria in a biofilm adhering to a textile product or a hard article,

component (a): one or more compounds selected from (a1) a compound represented by the following general formula (a1) (hereinafter referred to as component (a1)) and (a2) a bispyridinium compound (hereinafter referred to as component (a2)),

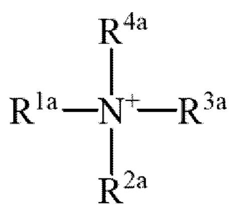 $X^-$ (a1)

wherein in the general formula (a1), $R^{1a}$ and $R^{2a}$ are each independently a linear or branched alkyl group with 8 carbons, $R^{3a}$ and $R^{4a}$ are each independently a linear or branched alkyl group with 1 or more and 3 or less carbons, and $X^-$ is an anion, and
component (b): an anionic surfactant including one or more compounds selected from (b1) a compound represented by the following general formula (b1) (hereinafter referred to as component (b1)) and (b2) an internal olefin sulfonate with 14 or more and 20 or less carbons (hereinafter referred to as component (b2)),

$$R^{1b}\text{-O-}[(PO)_p/(EO)_q]\text{-}SO_3M \qquad (b1)$$

wherein in the general formula (b1), $R^{1b}$ is a hydrocarbon group with 8 or more and 22 or less carbons, PO is a propyleneoxy group, EO is an ethyleneoxy group, "/" is a symbol indicating that the order in which PO and EO are bonded is unrestricted, p is an average number of added moles of PO and is a number of 0 or more and 10 or less, q is an average number of added moles of EO and is a number of 0 or more and 25 or less, and M is a hydrogen ion, an alkali metal ion, an alkaline earth metal ion (1/2 atom), an ammonium ion, or an organic ammonium ion.

**INTERNATIONAL SEARCH REPORT**

International application No. **PCT/JP2024/011911**

**A. CLASSIFICATION OF SUBJECT MATTER**

***A01N 33/12***(2006.01)i; ***A01N 31/02***(2006.01)i; ***A01N 43/40***(2006.01)i; ***A01P 1/00***(2006.01)i; ***A01P 3/00***(2006.01)i; ***C11D 1/14***(2006.01)i; ***C11D 1/29***(2006.01)i; ***C11D 1/62***(2006.01)i; ***C11D 3/26***(2006.01)i; ***C11D 3/28***(2006.01)i; ***C11D 3/48***(2006.01)i

FI: A01N33/12 101; A01N31/02; A01N43/40 101P; A01P1/00; A01P3/00; C11D1/14; C11D1/29; C11D1/62; C11D3/26; C11D3/28; C11D3/48

According to International Patent Classification (IPC) or to both national classification and IPC

**B. FIELDS SEARCHED**

Minimum documentation searched (classification system followed by classification symbols)

A01N33/12; A01N31/02; A01N43/40; A01P1/00; A01P3/00; C11D1/14; C11D1/29; C11D1/62; C11D3/26; C11D3/28; C11D3/48

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); CAplus/REGISTRY/MEDLINE/EMBASE/BIOSIS (STN)

**C. DOCUMENTS CONSIDERED TO BE RELEVANT**

| Category* | Citation of document, with indication, where appropriate, of the relevant passages | Relevant to claim No. |
|---|---|---|
| Y | JUNKA, A. et al. Efficacy of antiseptics containing povidone-iodine, octenidine dihydrochloride and ethacridine lactate against biofilm formed by Pseudomonas aeruginosa and Staphylococcus aureus measured with the novel biofilm-oriented antiseptics test. International Wound Journal. 2013, vol. 11, no. 6, pp. 730-734, doi: 10.1111/iwj.12057<br>tables 1, 2 | 1-15 |
| Y | JP 2016-35009 A (KAO CORPORATION) 17 March 2016 (2016-03-17)<br>claims, examples 1, 2 | 1-15 |
| Y | JP 2021-127389 A (KAO CORPORATION) 02 September 2021 (2021-09-02)<br>paragraphs [0087], [0092] | 7, 11, 15 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **06 June 2024** | **18 June 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2024/011911**

| Patent document cited in search report | Publication date (day/month/year) | Patent family member(s) | Publication date (day/month/year) |
|---|---|---|---|
| JP 2016-35009 A | 17 March 2016 | (Family: none) | |
| JP 2021-127389 A | 02 September 2021 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5728667 B
- GB 1533952 B
- JP S52105228 A
- WO 2014100807 A

### Non-patent literature cited in the description

- *CHEMICAL ABSTRACTS*, 70775-75-6
- *J. Am. Oil Chem. Soc.*, 1992, vol. 69, 39